Europäisches Patentamt

European Patent Office

Office européen des brevets

(11) Veröffentlichungsnummer: **0 499 186 B1**

## (12) EUROPÄISCHE PATENTSCHRIFT

(45) Veröffentlichungstag der Patentschrift: **30.11.94**

(51) Int. Cl.⁵: **B60T 7/08**

(21) Anmeldenummer: **92102211.7**

(22) Anmeldetag: **10.02.92**

(54) **Hilfskraftunterstützende Handbremshebelbetätigung.**

(30) Priorität: **12.02.91 DE 9101594 U**

(43) Veröffentlichungstag der Anmeldung:
**19.08.92 Patentblatt 92/34**

(45) Bekanntmachung des Hinweises auf die
Patenterteilung:
**30.11.94 Patentblatt 94/48**

(84) Benannte Vertragsstaaten:
**DE ES FR IT**

(56) Entgegenhaltungen:
**DE-A- 3 817 558**
**DE-A- 3 909 907**
**DE-U- 8 900 950**

(73) Patentinhaber: **SIEMENS AKTIENGESELL-
SCHAFT
Wittelsbacherplatz 2
D-80333 München (DE)**

(72) Erfinder: **Dietz, Armin, Dipl.-Ing.
Steinburgstrasse 89
W-8700 Würzburg (DE)**
Erfinder: **Schreier, Peter, Dipl.-Ing. (FH)
Eichendorffstrasse 22
W-6972 Tauberbischofsheim (DE)**

EP 0 499 186 B1

**Beschreibung**

Die Erfindung bezieht sich auf einen Servoantrieb mit durch einen Servomotor betätigbarem Zugseil-Stellglied gemäß Oberbegriff des Anspruchs 1; ein derartiger Servoantrieb ist durch die DE-A-39 09 907 für eine automatische Feststellbremse in einem Kraftfahrzeug bekannt.

Bei dem vorgenannten bekannten Servoantrieb wird ein auf mindestens zwei Radbremsen wirkendes Bremsseil über eine Umlenkrolle geführt, die über ein Zugseil axial verschieblich ist, das an einem Ende an einem Bremshebel befestigt ist und mit seinem anderen Ende auf einer Aufwickeltrommel eines Servoantriebs, insbesondere eines Elektromotors mit Getriebe, aufgewickelt ist. Wird das Zugseil auf die Aufwickeltrommel aufgewickelt, wird das Bremsseil mit einer definierten Zugkraft belastet und werden die Bremsen angelegt; bei Drehung der Aufwickelrolle in Gegenrichtung vermögen sich die Bremsen unter der Wirkung von Rückstellfedern wieder zu lösen.

Durch die DE-A-38 17 558 ist eine Handbremsvorrichtung mit einer veränderlichen Übersetzung mittels eines veränderlichen Wickelradius eines Bremsseil-Wickelkörpers derart bekannt, daß in Anpassung an die betätigende Handkraft einerseits durch eine niedrige Übersetzung kleine Leerwege und andererseits durch eine hohe Übersetzung eine große Kraft zum Verstellen der Bremse durch wenig Kraft am Bremshebel erreichbar sind.

Zur besseren Ausnutzung des zugseilbetätigenden Servomotors des Servoantriebs ist ein von dem Servomotor antreibbare, das eine Ende des Zugseils aufwickelnder Wickelkörper mit einem im Sinne einer Anpassung der Abgabeleistung des Servomotors an die Zugseil-Verstellkraft veränderbaren Wickelradius vorgesehen; zweckmäßigerweise ist eine Veränderung des Wickelradius im Sinne eines Betriebes des Servomotors im Arbeitspunkt seiner maximalen Abgabeleistung vorgesehen. Durch diese einfache Anpassung der Abgabeleistung des Motors an die jeweilige erforderliche Verstelleistung des Zugseiles und/oder der Rückstellfeder, derart daß der Motor an dem Arbeitspunkt arbeitet, an dem er seine maximale Leistung abgeben kann, wird unter optimaler Ausnutzung der Leistung des Servomotors der Verstellvorgang in kürzester Verstellzeit ermöglicht.

Die Erfindung sowie weitere vorteilhafte Ausgestaltungen der Erfindung gemäß Merkmalen der Unteransprüche wird im folgenden anhand eines schematisch dargestellten Ausführungsbeispiels in der Zeichnung näher erläutert; darin zeigen

FIG 1      eine automatische Feststellbremse mit einem Getriebemotor-Servoantrieb und einem Zugseil-Stellglied zur Betätigung der Handbremse eines Kraftfahrzeuges,

FIG 2,3      in axialer bzw. radialer Draufsicht einen kegelförmigen Wickelkörper für das Zugseil,

FIG 4,5      in axialer bzw. radialer Draufsicht einen kurvenscheibenförmigen Wickelkörper für das Zugseil

FIG 6      die Drehmoment-Leistungskurve des Servomotors

FIG 7      die Federkennlinie einer von dem Servomotor über das Zugseil gestreckten Rückholfeder.

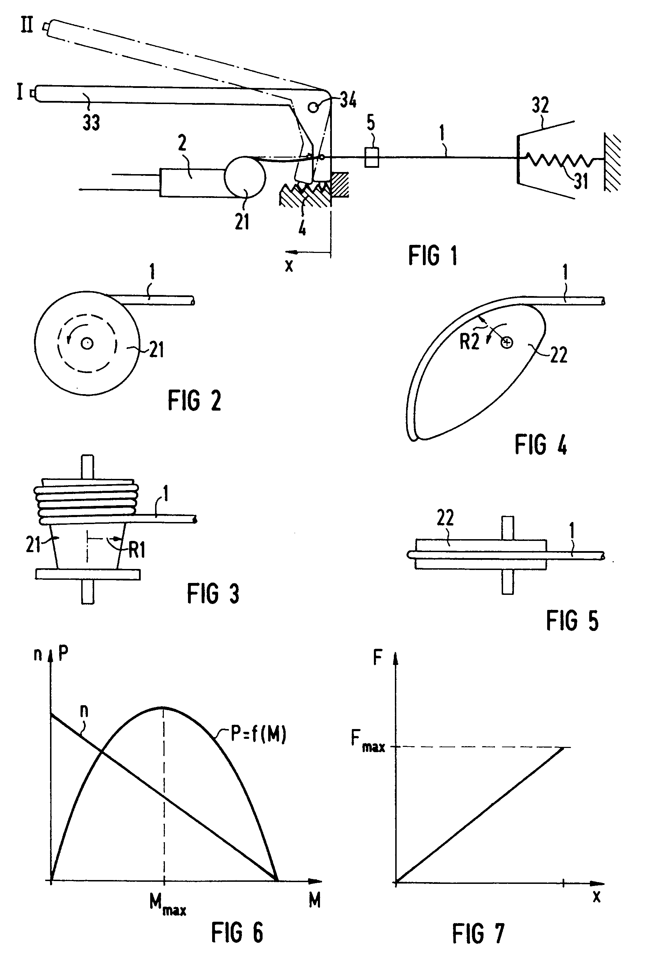

Figur 1 zeigt eine automatische Kraftfahrzeug-Handbremse 3, bei der über einen in einem Drehpunkt 34 gelagerten Handbremshebel 33 über ein Zugseil 1 die Bewegung einer Bremsbacke 32 in ihre Bremsstellung bei gleichzeitiger Streckung einer Rückstellfeder 31 und/oder des Zugseiles 1 in Gang gesetzt werden kann. Die Stellung I des Handbremshebels 33 bei angezogener Handbremse ist mit ausgezogener Linienkontur, die Stellung II des Handbremshebels 33 bei gelöster Handbremse mit gestrichelter Linienkontur jeweils dargestellt.

Zur automatischen Feststellbremsung der Handbremse 3 über den Servoantrieb wird das Zugseil 1 entgegen der Federkraft F der Rückstellfeder 31 durch den Servomotor 2 durch Aufwickeln des freien Endes des Zugseiles 1 verstellt; da das Zugseil 1 auch an dem einen Schenkel des Handbremshebels 33 angelenkt ist, wird dabei gleichzeitig der Handbremshebel 33 von der Stellung I in die Stellung II bewegt. Wie in Figur 1 angedeutet, wird die Bremsstellung II durch mechanische Verrastung des mit dem Zugseil 1 verbundenen Schenkels des Handbremshebels 33 in einer Rastschiene 4 mechanisch fixiert.

Die Einschaltung des Servoantriebs kann z.B. in Abhängigkeit von einer zugeordneten Zündschlüsselstellung oder z.B. auch durch eine kurze händische Anfangsbetätigung des Handbremshebels 33 erfolgen. Zur selbsttätigen Erkennung des Zeitpunktes, an dem der Servomotor 2 nach Erreichen der Bremsstellung II abgeschaltet werden kann, ist an dem Zugseil 1 ein Kraftsensor 5 vorgesehen, der bei Erreichen der Bremsstellung II, in der das Zugseil 1 nicht weiter bewegt werden kann, anspricht und einen entsprechenden Schaltimpuls zum Abschalten des Servomotors 2 abgibt. Anstelle des Kraftsensors 5 kann z.B. auch eine Erkennung der Bremsstellung II durch einen Servomotor-Drehzahlmesser bzw. einen Servomotor-Strommesser vorgesehen werden, der bei Erreichen der Drehzahl 0 und damit der Kurzschluß-Blockierung des antreibenden Elektro-Getriebemotors einen entsprechenden Schaltimpuls an diesen bzw. dessen Steuerung abgibt.

Figur 6 zeigt den Verlauf der Abgabeleistung P des Servomotors 1 in Abhängigkeit von seinem abgegebenen Moment M. Figur 7 zeigt die Kennlinie der Längungskraft F, die notwendig ist zur Längung der Rückstellfeder 31 und des Zugseiles 1 bei zunehmendem Federweg x. Um trotz der mit zunehmendem Federweg x zunehmenden Längungskraft F den Servomotor 2 im Bereich maximaler Abgabeleistung mit dem optimalen Drehmoment $M_{max}$ betreiben zu können, ist erfindungsgemäß gemäß Figur 2,3 bzw. 4,5 zur Aufwicklung des freien Endes des Zugseils 1 ein vom Servomotor 2 angetriebener kegelförmiger Wickelkörper gemäß Figur 2,3 bzw. ein kurvenscheibenförmiger Wickelkörper gemäß Figur 4,5 mit jeweils sich entsprechend verringerndem Wickelradius R1 bzw. R2 vorgesehen. Der jeweilige Wickelradius R1 bzw.R2 und damit die Wickelflächenkontur des kegelförmigen Wickelkörpers 21 bzw. scheibenförmigen Wickelkörpers 22 ergibt sich aus folgender Berechnung:

$$F \quad = \quad \frac{F_{max}}{x_{max}} \cdot x$$

$$M = R1 \cdot F \text{ bzw. } M = R2 \cdot F$$

Mit der Annahme: $M = M_{max}$

folgt daraus:

$$R1 \text{ bzw. } R2 = \frac{M}{F} = \frac{M_{max}}{\frac{F_{max}}{x_{max}} \cdot x} = K \cdot \frac{1}{x}$$

Anstelle des im Ausführungsbeispiel gezeigten Servoantrieb für eine automatische Kfz-Feststellbremse kann der erfindungsgemäße Antrieb auch vorteilhaft für einen motorischen Kfz-Fensterheber eingesetzt werden.

**Patentansprüche**

1. Servoantrieb mit durch einen Servomotor (2), insbesondere einen Elektro-Getriebemotor, betätigbarem Zugseil-Stellglied mit einem von dem Servomotor (2) antreibbaren, das eine Ende des Zugseiles (1) aufwickelnden Wickelkörper (21 bzw. 22), **gekennzeichnet durch** eine im Sinne einer kürzestmöglichen Verstellzeit durch entsprechende Änderung des Wickelradius (R1 bzw. R2) des Wickelkörpers (21 bzw. 22) an die jeweilige Zugseil-Verstellkraft (Längungskraft F) angepaßte Abgabeleistung (P) des Servormotors (2).

2. Servoantrieb nach Anspruch 1, **gekennzeichnet** durch eine Veränderung des Wickelradius (R1 bzw.R2) im Sinne eines Betriebes des Servomotores (2) im Arbeitspunkt $M_{max}$ seiner maximalen Abgabeleistung.

3. Servoantrieb nach Anspruch 1 oder 2, **gekennzeichnet** durch einen kegelförmigen Wickelkörper (21) mit in axialer Wickelrichtung veränderlichem Wickelradius (R1).

4. Servoantrieb nach Anspruch 1 oder 2, **gekennzeichnet** durch einen kurvenscheibenförmigen Wickelkörper (22) mit in tangentialer Wickelrichtung veränderlichem Wickelradius (R2).

5. Servoantrieb nach einem der Ansprüche 1 bis 4, gekennzeichnet durch ein von einem Elektro-Getriebemotor betätigbares Zugseil-Stellglied zum Anziehen der Handbremse (3) einer automatischen Kfz-Feststellbremse in ihre Bremsstellung entgegen der Längungskraft (F) einer Rückstellfeder (31) und/oder des Zugseiles (1), mit einem Wickelkörper für das Zugseil (1) mit einem entsprechend der bei Verstellung der Handbremse (3) zunehmenden Längungskraft (F) sich vermindernden Wickelradius (R1 bzw.R2).

## Claims

1. Servo drive having a traction cable actuating element which can be operated by a servomotor (2), in particular a geared electric motor, having a spool body (21 and 22, respectively) which can be driven by the servomotor (2) and winds up the one end of the traction cable (1), characterized by an output power (P) of the servomotor (2) which is matched to the respective traction cable adjusting force (elongation force F) by correspondingly changing the spool radius (R1 and R2 respectively) of the spool body (21 and 22, respectively) so as to keep the adjusting time as short as possible.

2. Servo drive according to Claim 1, characterized by a change in the spool radius (R1 and R2, respectively) so as to operate the servomotor (2) at the operating point $M_{max}$ of its maximum output power.

3. Servo drive according to Claim 1 or 2, characterized by a spool body (21) which is in the form of a cone and whose spool radius (R1) can change in the axial winding direction.

4. Servo drive according to Claim 1 or 2, characterized by a spool body (22) which is in the form of a cam disk and whose spool radius (R2) can change in the tangential winding direction.

5. Servo drive according to one of Claims 1 to 4, characterized by a traction cable actuating element, which can be operated by a geared electric motor, for pulling of the handbrake (3) of an automatic motor vehicle parking brake into its parking position against the elongation force (F) of a restoring spring (31) and/or of the traction cable (1), having a spool body for the traction cable (1) whose winding radius (R1 and R2, respectively) decreases in accordance with the elongation force (F), which increases when the handbrake (3) is adjusted.

## Revendications

1. Dispositif de servocommande comportant un organe de réglage à câble de traction, qui peut être actionné par un servomoteur (2), notamment un moto-réducteur électrique et comportant un corps d'enroulement (21 ou 22) qui peut être entraîné par le servomoteur (2) et qui enroule une extrémité du câble de traction (1), caractérisé par une puissance (P) délivrée par le servomoteur (2), qui est adaptée à la force respective de déplacement du câble de traction (force d'allongement F), dans le sens d'un temps de déplacement aussi bref que possible, grâce à une modification correspondante du rayon d'enroulement (R1 ou R2) du corps d'enroulement (21 ou 22).

2. Dispositif de servocommande suivant la revendication 1, caractérisé par une modification du rayon d'enroulement (R1 ou R2), dans le sens du fonctionnement d'un servomoteur (2) au point de fonctionnement $M_{max}$, où il délivre sa puissance maximale.

3. Dispositif de servocommande suivant la revendication 1 ou 2, caractérisé par un corps d'enroulement de forme conique (21) possédant un rayon d'enroulement (R1) qui varie dans la direction axiale d'enroulement.

4. Dispositif de servocommande suivant la revendication 1 ou 2, caractérisé par un corps d'enroulement (22) en forme de disque à came possédant un rayon d'enroulement (R2) variable dans la direction tangentielle d'enroulement.

5. Dispositif de servocommande suivant l'une des revendications 1 à 4, caractérisé par un organe de réglage à câble de traction, qui peut être actionné par un moto-réducteur électrique et sert à serrer le frein à main (3) d'un frein automatique de stationnement de véhicules automobiles, dans sa position de freinage à l'encontre de la force d'allongement (F) d'un ressort de rappel (31) et/ou d'un câble de traction (1), et comportant un corps d'enroulement pour le câble de traction (1), possédant un rayon d'enroulement (R1 ou R2) qui diminue en fonction de la force d'allongement (F) qui augmente lors du déplacement du frein à main (3).

FIG 1

FIG 2

FIG 4

FIG 3

FIG 5

FIG 6

FIG 7